# EUROPEAN PATENT APPLICATION

(11) **EP 4 741 260 A1**
(43) Date of publication of application: **13.05.2026**
(21) Application number: 24835737.8
(22) Date of filing: 28.02.2024
(51) Int. Cl.: B62D 5/04, G01L 3/10

(54) **ELECTRIC POWER STEERING DEVICE AND METHOD FOR MANUFACTURING ELECTRIC POWER STEERING DEVICE**

(30) Priority: 04.07.2023 JP 2023109788
(71) Applicant: NSK Steering & Control, Inc., Tokyo, 141-0032 (JP)
(72) Inventor: SHIGEYAMA, Tomofumi, Maebashi-shi, Gunma 371-8527 (JP)
(74) Representative: SSM Sandmair
(86) International application number: PCT/JP2024/007403
(87) International publication number: WO 2025/009214

(57) **Abstract**

In order to suppress breakage of a permanent magnet used in a torque sensor, an electric power steering device 10 includes: an input shaft 13 having an input-shaft-side hole 13a inside; an output shaft 16 having an output-shaft-side hole 16a inside; a torsion bar 17 with one end side disposed inside the input-shaft-side hole 13a and the other end side disposed inside the output-shaft-side hole 16a on the other end side, and couples the input shaft 13 and the output shaft 16; and a torque sensor 30 including a magnet member 31 that includes a permanent magnet 32 and is connected to an outer peripheral surface 13b of the input shaft 13, in which the input shaft 13 has a press-fitting portion 14 where the torsion bar 17 is press-fitted into the input-shaft-side hole 13a, and a connecting portion 15, which is a portion of the input shaft 13 to which the magnet member 31 is connected, is located at a position different from a position of the press-fitting portion 14 in an axial direction.

## Description

### Field

The present disclosure relates to an electric power steering device and a method for manufacturing an electric power steering device.

### Background

An electric power steering device includes a torque sensor that detects steering torque when a steering wheel is steered, and an electric motor that generates an assist force, and can assist a steering force of a driver as the electric motor generates the assist force based on the steering torque detected by the torque sensor. In such an electric power steering device, an input shaft and an output shaft are coupled via a torsion bar, and the torque sensor can detect the steering torque by detecting a change in a relative rotation angle between the input shaft and the output shaft due to slight twisting of the torsion bar when the steering torque is transmitted from the input shaft to the output shaft via the torsion bar.

For example, in an electric power steering device described in Patent Literature 1, a proximal end of a torsion bar is press-fitted and fixed to an input shaft, a distal end of the torsion bar is fixed to an output shaft by a fixing pin, and a torque sensor unit is provided on a vehicle rear side of the output shaft. Further, in a steering device described in Patent Literature 2, a torsion bar is fitted into a hole provided at the center of an input shaft and fixed to the input shaft via a pin, and with respect to an output shaft, the torsion bar is press-fitted into a hole provided at the center of the output shaft and is fixed to the output shaft. Further, in the steering device described in Patent Literature 2, a torque sensor includes a magnet and a yoke, the magnet is attached to the input shaft via a first sleeve, and the yoke is attached to the output shaft via a second sleeve.

### Citation List

### Patent Literature

Patent Literature 1: JP 2006-27350 A
Patent Literature 2: WO 2019/059230 A

### Summary

### Technical Problem

A permanent magnet is used in a torque sensor used in an electric power steering device, and the permanent magnet is disposed on an input shaft or an output shaft. However, since the permanent magnet has low ductility, it is conceivable that the permanent magnet is broken when a shaft to which the permanent magnet is attached is elastically deformed. For example, when a torsion bar is press-fitted to the input shaft in a state where the permanent magnet is attached directly or via a sleeve to an outer peripheral surface of a portion of the input shaft to which the torsion bar is press-fitted, the input shaft slightly swells due to the press-fitting of the torsion bar, and slightly expands in diameter. In this case, there is a possibility that the permanent magnet attached to the outer peripheral surface of the input shaft directly or via the sleeve cannot follow the swelling of the input shaft and breaks. When the permanent magnet is broken in this manner, the torque sensor cannot detect steering torque. Thus, the electric power steering device including the torque sensor has room for improvement from the viewpoint of the way of disposing the permanent magnet.

The present disclosure has been made in view of the above, and an object thereof is to provide an electric power steering device capable of suppressing breakage of a permanent magnet used in a torque sensor, and a method for manufacturing the electric power steering device.

### Solution to Problem

A electric power steering device according to an aspect of the present disclosure includes: an input shaft having an input-shaft-side hole inside; an output shaft having an output-shaft-side hole inside; a torsion bar with one end side disposed inside the input-shaft-side hole and the other end side disposed inside the output-shaft-side hole, the torsion bar coupling the input shaft and the output shaft; and a torque sensor including a magnet member that includes a permanent magnet and is connected to an outer peripheral surface of the input shaft, wherein the input shaft has a press-fitting portion where the torsion bar is press-fitted into the input-shaft-side hole, and a connecting portion, which is a portion of the input shaft to which the magnet member is connected, is located at a position different from a position of the press-fitting portion in an axial direction of the input shaft.

According to this configuration, a position in an axial direction of a connecting portion to which a magnet member is connected is different from a press-fitting portion in an input shaft. Thus, even when a diameter of the input shaft slightly increases at a position of the press-fitting portion when a torsion bar is press-fitted into an input-shaft-side hole, the magnet member having a permanent magnet can be attached to the input shaft without being affected by the expansion in the diameter of the input shaft. Therefore, the permanent magnet having low ductility can be attached to the input shaft while avoiding the expansion in the diameter of the input shaft due to press-fitting of the torsion bar. As a result, breakage of the permanent magnet used in a torque sensor can be suppressed.

In a preferred aspect, the magnet member includes a magnet sleeve on which the permanent magnet is disposed, and the magnet sleeve is connected to the connecting portion of the input shaft.

According to this configuration, a magnet sleeve on which the permanent magnet is disposed is connected to the connecting portion of the input shaft, a force acting on the permanent magnet when the magnet member is disposed on the input shaft can be reduced as much as possible. That is, stress generated in the permanent magnet when the magnet member is disposed on the input shaft can be reduced as much as possible. As a result, breakage of the permanent magnet used in a torque sensor can be suppressed.

In a preferred aspect, the permanent magnet included in the magnet member is connected to the connecting portion of the input shaft.

According to this configuration, the permanent magnet included in the magnet member is directly connected to the connecting portion of the input shaft, and thus, the number of parts can be reduced. As a result, manufacturing cost can be reduced.

In a preferred aspect, the magnet member has a separating portion that extends from the position of the connecting portion to a side where the press-fitting portion is located in the axial direction and is separated from the outer peripheral surface of the input shaft, and at least a part of the press-fitting portion is located inside the separating portion in a radial direction of the input shaft.

According to this configuration, at least a part of the press-fitting portion of the input shaft is located inside a separating portion included in the magnet member. Thus, it is possible to reduce a depth of the input-shaft-side hole into which the torsion bar is press-fitted while making the positions of the connecting portion to which the magnet member is connected and the press-fitting portion in the input shaft different in the axial direction. As a result, it is possible to simplify a cutting process at the time of forming the input-shaft-side hole in the input shaft, and to attach the permanent magnet included in the magnet member to the input shaft while avoiding the expansion in the diameter of the input shaft due to press-fitting of the torsion bar. As a result, it is possible to suppress the breakage of the permanent magnet used in the torque sensor while reducing the manufacturing cost.

In a preferred aspect, the position of the press-fitting portion in the axial direction is located closer to the output shaft than the position of the connecting portion.

According to this configuration, the press-fitting portion where the torsion bar is press-fitted in the input shaft is located on an output shaft side with respect to the position of the connecting portion connecting the magnet member on the input shaft in the axial direction, the depth of the input-shaft-side hole from an end of the input shaft can be reduced. As a result, it is possible to reduce a cutting range at the time of forming the input-shaft-side hole by cutting with respect to the input shaft, and it is possible to easily perform the cutting process at the time of forming the input-shaft-side hole. Further, since the depth of the input-shaft-side hole from the end of the input shaft is reduced, it is possible to shorten a distance by which the torsion bar is pushed into the input-shaft-side hole at the time of press-fitting the torsion bar into the input-shaft-side hole. As a result, it is possible to improve assemblability at the time of assembling the torsion bar to the input shaft, and it is possible to improve workability in the assembly process. As a result, it is possible to reduce the manufacturing costs.

In a preferred aspect, a torsion bar sleeve is disposed between the output-shaft-side hole and the torsion bar disposed inside the output-shaft-side hole.

According to this configuration, a torsion bar sleeve is disposed in an output-shaft-side hole of the output shaft, and thus, the torsion bar can be supported by the torsion bar sleeve in the output-shaft-side hole. As a result, it is possible to suppress the torsion bar from falling down in the output-shaft-side hole. For example, when the torsion bar is press-fitted into the input-shaft-side hole of the input shaft in a state where the torsion bar is disposed in the output-shaft-side hole, the torsion bar is supported by the torsion bar sleeve, so that the torsion bar can be press-fitted into the input-shaft-side hole while preventing the torsion bar from falling down in the output-shaft-side hole. As a result, assemblability of an electric power steering device can be improved.

In a preferred aspect, the traveling assistance device further includes a housing in which the input shaft and the output shaft are disposed; and
a bearing that rotatably supports the output shaft with respect to the housing, at least a part of the bearing being disposed at a same position as a position of the torsion bar sleeve in the axial direction.

According to this configuration, at least a part of a bearing, which rotatably supports the output shaft, in the axial direction is disposed at the same position as a position of the torsion bar sleeve, and thus, a load acting on the torsion bar sleeve from the torsion bar can be received by the bearing disposed at a short distance from the torsion bar sleeve. As a result, the load acting on the bearing can be reduced, and it is possible to suppress a state where relative rotation between an inner ring and an outer ring of the bearing becomes difficult due to a large load acting on the bearing in the radial direction. Therefore, it is possible to suppress an increase in rotational resistance when the output shaft supported by the bearing is rotated, and it is possible to reduce rotational resistance when a steering shaft having the output shaft is rotated. As a result, the steering torque when the steering wheel is rotated to perform steering can be reduced, and the operability of the electric power steering device can be improved.

In a preferred aspect, a key lock collar included in a lock device, which restricts rotation of the input shaft, is disposed on the outer peripheral surface of the input shaft, and the key lock collar is disposed at a position different from the position of the press-fitting portion in the axial direction.

According to this configuration, a key lock collar is disposed at a position different from the press-fitting portion in the axial direction, and thus, it is possible to suppress a press-fitted portion between the key lock collar and the input shaft from being located at the same position in the axial direction with the press-fitting portion of the torsion bar in the input shaft. Therefore, it is possible to suppress a fitting force of the key lock collar with respect to the input shaft from changing from a fitting force set at the time of design due to a slight expansion in the diameter of the input shaft at the position of the press-fitting portion when the torsion bar is press-fitted into the input-shaft-side hole. As a result, when a force in a direction to rotate the input shaft and the key lock collar relative to each other is applied to the key lock collar, it is possible to suppress slip torque, which is torque with a magnitude that causes the key lock collar to rotate relative to the input shaft, from being changed from set slip torque. Therefore, the key lock collar can be prevented from rotating relative to the input shaft with unexpected small torque, and the key lock collar can be appropriately fitted to the input shaft. As a result, a lock device having the key lock collar can be operated appropriately.

In a preferred aspect, a coupling pin, which couples the output shaft and the torsion bar disposed inside the output-shaft-side hole, is disposed on the output shaft.

According to this configuration, the torsion bar is coupled by a coupling pin without being press-fitted into the output shaft, and thus, it is possible to reduce a force in the axial direction applied to the torsion bar when the torsion bar is inserted into the output-shaft-side hole and coupled to the output shaft. As a result, it is possible to suppress occurrence of buckling in the torsion bar due to application of a large force in the axial direction to the torsion bar from a position away from a portion of the torsion bar press-fitted to the output shaft. Therefore, assemblability at the time of assembling the torsion bar to the output shaft can be improved, and workability in the assembly process can be improved. As a result, manufacturing cost can be reduced.

A method for manufacturing an electric power steering device including: an input shaft having an input-shaft-side hole inside; an output shaft having an output-shaft-side hole inside; a torsion bar with one end side disposed inside the input-shaft-side hole and another end side disposed inside the output-shaft-side hole, the torsion bar coupling the input shaft and the output shaft; and a torque sensor including a magnet member connected to an outer peripheral surface of the input shaft, the input shaft having a press-fitting portion where the torsion bar is press-fitted into the input-shaft-side hole, the method includes: performing forging to form the press-fitting portion of the input shaft; and forming a connecting portion of the input shaft to which is a portion connecting the magnet member is connected, to be located at a position different from a position of the press-fitting portion in an axial direction of the input shaft.

According to this configuration, the press-fitting portion of the input shaft is formed by forging, and thus, the rigidity of the press-fitting portion can be enhanced. Therefore, the input shaft and the torsion bar, coupled to each other by press-fitting the torsion bar into the input-shaft-side hole of the input shaft, can be firmly coupled to each other, and relative rotation between the input shaft and the torsion bar can be suppressed when steering torque is applied to the input shaft. As a result, the steering torque applied to the input shaft can be appropriately transmitted to the output shaft via the torsion bar, and the input shaft and the output shaft can be rotated relative to each other by slight twisting of the torsion bar according to a magnitude of the steering torque. Therefore, the magnitude of the steering torque can be detected by detecting the relative rotation between the input shaft and the output shaft by the torque sensor. As a result, the magnitude of the steering torque input to the input shaft can be appropriately detected. Advantageous Effects of Invention

The electric power steering device and the method for manufacturing the electric power steering device according to the present disclosure have an effect of suppressing the breakage of the permanent magnet used in the torque sensor.

### Brief Description of Drawings

FIG. 1 is a schematic diagram of an electric power steering device according to a first embodiment.
FIG. 2 is a cross-sectional view of a main part of the electric power steering device according to the first embodiment.
FIG. 3 is a schematic view illustrating an outline of a permanent magnet, a stator, and a magnetism collecting yoke included in a torque sensor.
FIG. 4 is a cross-sectional view of a main part of an electric power steering device according to a second embodiment.
FIG. 5 is a detailed view of a portion A in FIG. 4.
FIG. 6 is a modification of the electric power steering device according to the second embodiment, and is a cross-sectional view of a main part of the electric power steering device illustrating a case where a magnet member does not include a magnet sleeve.

### Description of Embodiments

Hereinafter, the present disclosure will be described in detail with reference to the drawings. Note that the present disclosure is not limited to the following modes for carrying out the invention (hereinafter, referred to as embodiments). Further, constituent elements in the following embodiments include those that can be easily assumed by those skilled in the art, those that are substantially the same, and those within a so-called equivalent range. Furthermore, the constituent elements disclosed in the following embodiments can be appropriately combined.

### [First Embodiment]

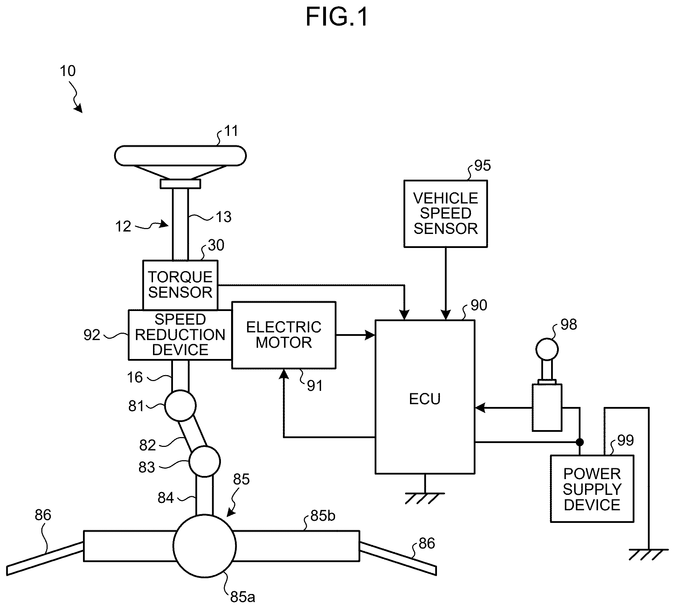

FIG. 1 is a schematic diagram of an electric power steering device 10 according to a first embodiment. As illustrated in FIG. 1, the electric power steering device 10 includes a steering wheel 11, a steering shaft 12, a torque sensor 30, an electric motor 91, a speed reduction device 92, a universal joint 81, an intermediate shaft 82, and a universal joint 83 in order of transmission of a force applied from an operator, and is joined to a stub shaft 84. In the following description, a direction along a central axis AX of the steering shaft 12 is referred to as an "axial direction", and a direction intersecting (orthogonal to) the axial direction is referred to as a "radial direction".

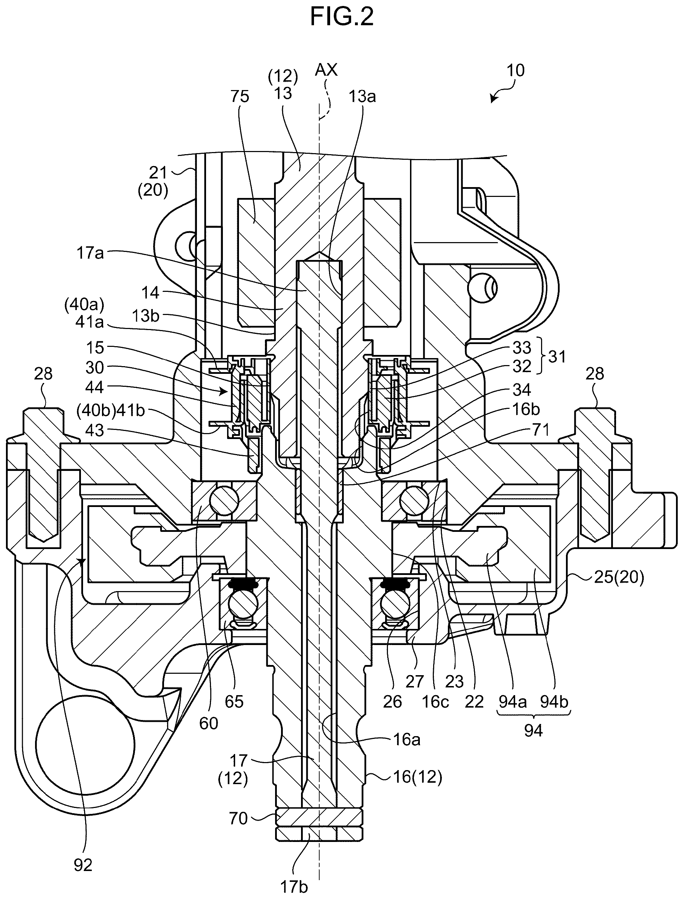

The steering wheel 11 is attached to one end of the steering shaft 12, and the intermediate shaft 82 is coupled to the other end of the steering shaft 12 via the universal joint 81. The steering shaft 12 is rotated by torque input from the steering wheel 11. The steering shaft 12 includes an input shaft 13, an output shaft 16, and a torsion bar 17 (see FIG. 2). The torsion bar 17 is coupled to both the input shaft 13 and the output shaft 16, and the input shaft 13 and the output shaft 16 are coupled via the torsion bar 17. The steering wheel 11 is attached to the steering shaft 12 by being coupled to one end of the input shaft 13, and the torsion bar 17 extends from the other end of the input shaft 13 toward a side where the output shaft 16 is located. The output shaft 16 has one end from which the torsion bar 17 extends one end side, and the other end which is coupled to the intermediate shaft 82 via the universal joint 81. Rotational torque is transmitted between the input shaft 13 and the output shaft 16 via the torsion bar 17 coupled to the both.

The universal joint 81 and the universal joint 83 are disposed at both ends of the intermediate shaft 82 in the extending direction. The intermediate shaft 82 has one end coupled to the universal joint 81 and the other end coupled to the universal joint 83. The universal joint 81 out of the universal joint 81 and the universal joint 83 couples the intermediate shaft 82 and the steering shaft 12. The universal joint 83 couples the intermediate shaft 82 and the stub shaft 84. The stub shaft 84 has one end coupled to the universal joint 83 and the other end coupled to a steering gear 85. The intermediate shaft 82 has one end coupled to the steering shaft 12 via the universal joint 81 and the other end coupled to the stub shaft 84 via the universal joint 83. The universal joint 81 and the universal joint 83 are, for example, cardan joints. Rotation of the steering shaft 12 is transmitted to the stub shaft 84 via the intermediate shaft 82. Therefore, the intermediate shaft 82 is rotatable together with the steering shaft 12.

The steering gear 85 includes a pinion gear 85a and a rack bar 85b. The pinion gear 85a is coupled to the stub shaft 84. The rack bar 85b meshes with the pinion gear 85a. The steering gear 85 converts rotational motion transmitted to the pinion gear 85a into linear motion with the rack bar 85b. The rack bar 85b is coupled to a tie rod 86. As the rack bar 85b moves, an angle of a wheel changes. That is, the electric power steering device 10 is a rack and pinion type electric power steering device.

The electric power steering device 10 further includes an electronic control unit (ECU) 90 and a vehicle speed sensor 95. The electric motor 91, the vehicle speed sensor 95, and the torque sensor 30 are electrically connected to the ECU 90. The speed reduction device 92 is attached to the electric motor 91. The torque sensor 30 outputs steering torque, transmitted to the input shaft 13, to the ECU 90 by controller area network (CAN) communication. The vehicle speed sensor 95 detects a traveling speed (vehicle speed) of a vehicle body on which the electric power steering device 10 is mounted. The vehicle speed sensor 95 is provided in the vehicle body, and outputs the vehicle speed to the ECU 90 by CAN communication.

The ECU 90 controls an operation of the electric motor 91. The ECU 90 acquires a signal from each of the torque sensor 30 and the vehicle speed sensor 95. Power is supplied from a power supply device 99 (for example, an in-vehicle battery) to the ECU 90 in a state where an ignition switch 98 is turned on. The ECU 90 calculates an auxiliary steering command value based on the steering torque and the vehicle speed. The ECU 90 adjusts a power value to be supplied to the electric motor 91 based on the auxiliary steering command value. The ECU 90 acquires information on an induced voltage of the electric motor 91 or information output from a resolver and the like provided in the electric motor 91. The ECU 90 controls the electric motor 91 to reduce the force required for operating the steering wheel 11.

Next, a main part of the electric power steering device 10 will be described in detail. FIG. 2 is a cross-sectional view of the main part of the electric power steering device 10 according to the first embodiment. As illustrated in FIG. 2, the electric power steering device 10 includes the input shaft 13 that is a first shaft, the output shaft 16 that is a second shaft, the torsion bar 17, the torque sensor 30, a housing 20, and bearings 60 and 65. The input shaft 13, the output shaft 16, and the torsion bar 17 have the same central axis AX. The input shaft 13 and the output shaft 16 are coupled in the axial direction, and the torsion bar 17 is disposed inside the input shaft 13 and the output shaft 16.

The input shaft 13 is, for example, a solid shaft. The input shaft 13 is rotatable about the central axis AX. A spline shaft (not illustrated) is formed at the end of the input shaft 13 on a side opposite to the side coupled to the output shaft 16, and the steering wheel 11 (see FIG. 1) is coupled to the spline shaft directly or via another shaft. The input shaft 13 has an input-shaft-side hole 13a, which is a hole extending in the axial direction from an end on the side coupled to the output shaft 16, on the inner side in the radial direction.

The output shaft 16 is a tubular member having an output-shaft-side hole 16a and a coupling hole 16b, which extend in the axial direction, on the inner side in the radial direction. The output shaft 16 is located with respect to the input shaft 13 on the side where the end of the input shaft 13 where the input-shaft-side hole 13a is formed is located. The output shaft 16 is rotatable about the central axis AX. The coupling hole 16b has an inner diameter larger than that of the output-shaft-side hole 16a, and is formed at a predetermined depth from the end of the output shaft 16 on the side to which the input shaft 13 is coupled toward the side opposite to the side where the input shaft 13 is located. The output-shaft-side hole 16a extends from an end of the coupling hole 16b in the output shaft 16 toward the side opposite to the side where the input shaft 13 is located. A portion near the end of the input shaft 13 is inserted into the coupling hole 16b.

A driving force generated by the electric motor 91 (see FIG. 1) is transmitted to the output shaft 16 via a worm (not illustrated) included in the speed reduction device 92 and a worm wheel 94. That is, the driving force generated by the electric motor 91 is transmitted to the worm wheel 94 via the worm to rotate the worm wheel 94. The worm and the worm wheel 94 reduce a rotational speed of the driving force generated by the electric motor 91 to increase the torque.

The worm wheel 94 includes a cored bar 94a and wheel teeth 94b. The cored bar 94a is made of, for example, a metal material and is formed in a substantially annular shape. The wheel teeth 94b are made of, for example, a resin material, and are disposed on the outer periphery of the cored bar 94a integrally with the cored bar 94a. The worm wheel 94 is fixed to the output shaft 16 by press-fitting the cored bar 94a into the output shaft 16. The worm is directly or indirectly coupled to the output shaft of the electric motor 91, and rotates integrally with the output shaft of the electric motor 91. The worm that rotates by the driving force generated by the electric motor 91 meshes with the wheel teeth 94b of the worm wheel 94. Therefore, the speed reduction device 92 increases the torque and transmits the driving force generated by the electric motor 91 to the output shaft 16, and applies auxiliary steering torque to the output shaft 16. That is, the electric power steering device 10 according to the first embodiment is a column assist type electric power steering device in which the auxiliary steering torque is applied to the steering shaft 12.

The torsion bar 17 is a solid elastic member extending in the axial direction. The torsion bar 17 has one end side in the axial direction disposed inside the input-shaft-side hole 13a of the input shaft 13, and the other end side in the axial direction disposed inside the output-shaft-side hole 16a of the output shaft 16, thereby coupling the input shaft 13 and the output shaft 16. In a portion of the torsion bar 17 on the side disposed inside the input-shaft-side hole 13a of the input shaft 13, the vicinity of an end is press-fitted into the input-shaft-side hole 13a. As a result, the torsion bar 17 is fixed to the input shaft 13 in a relatively rotatable manner.

Specifically, in the torsion bar 17, an enlarged diameter portion 17a is formed in the vicinity of the end on the side disposed inside the input-shaft-side hole 13a of the input shaft 13. The enlarged diameter portion 17a is disposed in a predetermined range in the axial direction from the end of the torsion bar 17 on the side disposed inside the input-shaft-side hole 13a, and has a diameter slightly larger than an inner diameter of the input-shaft-side hole 13a. The diameter of the enlarged diameter portion 17a is larger than a diameter of a portion of the torsion bar 17 other than the enlarged diameter portion 17a, and the diameter of the portion of the torsion bar 17 other than the enlarged diameter portion 17a is smaller than the inner diameter of the input-shaft-side hole 13a. The torsion bar 17 is press-fitted and fixed to the input-shaft-side hole 13a by press-fitting the enlarged diameter portion 17a into the input-shaft-side hole 13a of the input shaft 13.

Since the torsion bar 17 is press-fitted in this manner, the input shaft 13 has a press-fitting portion 14 which is a portion where the torsion bar 17 is press-fitted into the input-shaft-side hole 13a. The press-fitting portion 14 of the input shaft 13 is in a range where the enlarged diameter portion 17a is located in the axial direction in a state where the torsion bar 17 is press-fitted into the input-shaft-side hole 13a. That is, the press-fitting portion 14 is in a range in the axial direction of a portion where the enlarged diameter portion 17a of the torsion bar 17 is press-fitted in the input-shaft-side hole 13a into which the torsion bar 17 is press-fitted.

A portion of the torsion bar 17 on the side disposed inside the output-shaft-side hole 16a of the output shaft 16 is coupled to the output shaft 16 by a coupling pin 70. That is, the coupling pin 70, which couples the torsion bar 17 disposed inside the output-shaft-side hole 16a and the output shaft 16, is disposed in the output shaft 16.

Specifically, a through hole penetrating in the radial direction is formed at the end of the torsion bar 17 on the side inserted into the output-shaft-side hole 16a of the output shaft 16. An enlarged diameter portion 17b is also formed in the vicinity of an end of the torsion bar 17 on the side disposed inside the output-shaft-side hole 16a of the output shaft 16, and a through hole is formed in the enlarged diameter portion 17b. Further, in the output shaft 16, a through hole penetrating in the radial direction is also formed at a position where the through hole of the torsion bar 17 is formed in the axial direction. The through hole formed in the enlarged diameter portion 17b of the torsion bar 17 and the through hole formed in the output shaft 16 communicate with each other. The coupling pin 70 is inserted into the through hole formed in the torsion bar 17 and the through hole formed in the output shaft 16. As a result, the end of the torsion bar 17 on the side inserted into the output-shaft-side hole 16a of the output shaft 16 is fixed to the output shaft 16 via the coupling pin 70.

Further, a torsion bar sleeve 71 is disposed between the output-shaft-side hole 16a of the output shaft 16 and the torsion bar 17 disposed inside the output-shaft-side hole 16a. The torsion bar sleeve 71 is formed in a substantially cylindrical shape, and is disposed at a position inside the output-shaft-side hole 16a, the position being close to the end on the side where the input shaft 13 is located in the axial direction. The torsion bar sleeve 71 has an outer diameter being substantially equal to an inner diameter of a portion of the output-shaft-side hole 16a where the torsion bar sleeve 71 is disposed, and an inner diameter being slightly larger than an outer diameter of a portion of the torsion bar 17 located inside the torsion bar sleeve 71. Further, the inner diameter of the torsion bar sleeve 71 is larger than an outer diameter of any portion of the torsion bar 17 from the portion located inside the torsion bar sleeve 71 to a portion on the end side where the enlarged diameter portion 17b through which the coupling pin 70 penetrates is located.

The torsion bar sleeve 71 formed in this manner is fitted into the output-shaft-side hole 16a inside the output-shaft-side hole 16a, and the torsion bar 17 passes through the inside of the torsion bar sleeve 71 and is disposed inside the output-shaft-side hole 16a. A radial gap between the portion of the torsion bar 17 located inside the torsion bar sleeve 71 and the torsion bar sleeve 71 is smaller than a gap of any portion between the output-shaft-side hole 16a and the torsion bar 17 located between the portion where the torsion bar sleeve 71 is disposed and the enlarged diameter portion 17b through which the coupling pin 70 passes.

At least a part of the steering shaft 12 is disposed inside the housing 20. The housing 20 is a casing of the steering shaft 12 and the torque sensor 30, and the input shaft 13 and the output shaft 16 are disposed inside the housing 20. The housing 20 includes a first housing 21 and a second housing 25. The first housing 21 is located close to the input shaft 13 in the axial direction, the second housing 25 is located close to the output shaft 16 in the axial direction, and the first housing 21 and the second housing 25 are coupled in the axial direction by a coupling bolt 28. The second housing 25 has a space in which the worm (not illustrated) and the worm wheel 94 are disposed, and the second housing 25 is also provided as a gear box.

The bearings 60 and 65 are interposed between the housing 20 and the steering shaft 12, and the steering shaft 12 is rotatably supported by the bearings 60 and 65. The bearing 60 is provided as a first bearing that rotatably supports the output shaft 16 with respect to the first housing 21. The bearing 65 is provided as a second bearing that rotatably supports the output shaft 16 with respect to the second housing 25.

The bearing 60 and the bearing 65 are disposed on both sides in the axial direction of a position where the worm wheel 94 is fixed on the output shaft 16. The bearing 60 is disposed on the side where the input shaft 13 is located in the axial direction with respect to the position where the cored bar 94a of the worm wheel 94 is fixed on the output shaft 16, and the bearing 65 is disposed on the side opposite to the side where the input shaft 13 is located in the axial direction with respect to the position where the cored bar 94a of the worm wheel 94 is fixed. That is, the bearing 65 is disposed on the side opposite to the side where the bearing 60 is located with respect to the worm wheel 94 in the axial direction.

Specifically, the output shaft 16 has a radial protrusion 16c protruding outward in the radial direction with respect to a portion of the output shaft 16 where the bearing 60 and the bearing 65 are disposed. A width in the axial direction of the radial protrusion 16c is substantially equal to a width in the axial direction of a portion of the cored bar 94a of the worm wheel 94 fixed to the output shaft 16, and is slightly larger than a width of the cored bar 94a. The worm wheel 94 is fixed to a portion of the radial protrusion 16c of the output shaft 16 by press-fitting the cored bar 94a into the radial protrusion 16c.

The bearing 60 and the bearing 65 are disposed on opposite sides in the axial direction with respect to the radial protrusion 16c. As a result, the bearing 60 and the bearing 65 are disposed on the opposite sides in the axial direction with respect to the worm wheel 94.

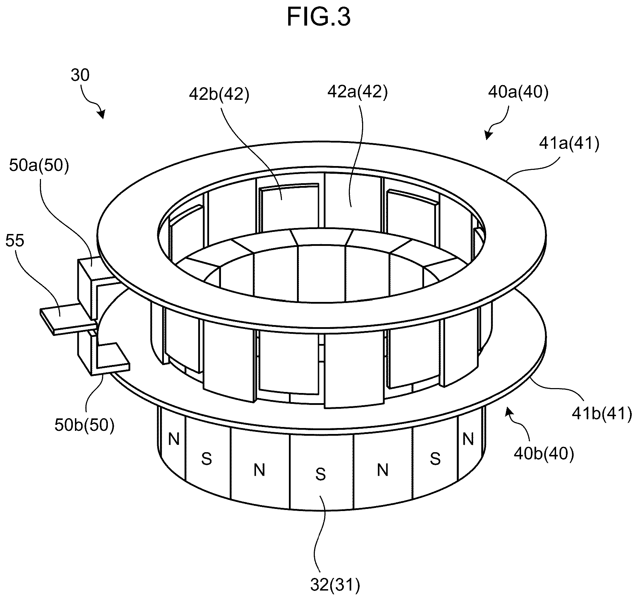

The torque sensor 30 includes a permanent magnet 32, a stator 40, a magnetism collecting yoke 50 (see FIG. 3), and a Hall IC 55 (see FIG. 3). Among them, the permanent magnet 32 and the stator 40 are fixed to the steering shaft 12, and the magnetism collecting yoke 50 and the Hall IC 55 are fixed to the housing 20.

FIG. 3 is a schematic view illustrating an outline of the permanent magnet 32, the stator 40, and the magnetism collecting yoke 50 included in the torque sensor 30. One of the permanent magnet 32 and the stator 40 included in the torque sensor 30 is attached to the first shaft, and the other is attached to the second shaft. In the first embodiment, the permanent magnet 32 is attached to the input shaft 13 that is the first shaft, and the stator 40 is attached to the output shaft 16 that is the second shaft. Among them, the permanent magnet 32 is formed in a substantially cylindrical shape, and is a multipolar magnet in which a plurality of N poles and S poles are alternately disposed in the circumferential direction.

The stator 40 includes a flange 41 and teeth 42. The flange 41 is formed in an annular plate-like shape whose thickness direction is the axial direction. The tooth 42 extends in the axial direction of the flange 41 from an inner peripheral portion of the annular flange 41 and is formed in a plate shape such that the thickness direction of the plate is the radial direction of the flange 41. Further, as for the teeth 42, a plurality of teeth 42 are disposed side by side in the circumferential direction of the flange 41 at intervals.

The stator 40 formed in this manner includes a first stator 40a and a second stator 40b, which are a pair of the stators 40 formed in the same shape, and each of the first stator 40a and the second stator 40b has the flange 41 and the teeth 42. That is, the first stator 40a has an annular first flange 41a and a plurality of first teeth 42a, and the second stator 40b has an annular second flange 41b and a plurality of second teeth 42b. The first stator 40a and the second stator 40b are attached to the same shaft such that both the flanges 41 are located coaxially with each of the flanges 41 being located in directions away from the other stator 40, and are both attached to the output shaft 16 in the first embodiment.

That is, the first stator 40a is disposed such that the first teeth 42a extend from the first flange 41a toward the second stator 40b, and the second stator 40b is disposed such that the second teeth 42b extend from the second flange 41b toward the first stator 40a. At this time, since the plurality of first teeth 42a and the plurality of second teeth 42b are provided at intervals in the first flange 41a and the second flange 41b, respectively, the first stator 40a and the second stator 40b are combined such that the teeth 42 of the own stator 40 are located in portions where the teeth 42 of the other stator 40 are not located in the circumferential direction.

The permanent magnet 32 attached to the input shaft 13 is disposed radially inward of the first stator 40a and the second stator 40b combined in this manner. Further, the permanent magnet 32 and the stator 40 are disposed such that axial directions thereof coincide with the axial direction of the input shaft 13 and the output shaft 16. Therefore, the permanent magnet 32 and the stator 40 are attached to the input shaft 13 and the output shaft 16 in a state where an outer peripheral surface of the permanent magnet 32 is in a positional relationship of facing the teeth 42 of the stator 40. Since the permanent magnet 32 and the stator 40 are disposed in the positional relationship, when torque is transmitted between the input shaft 13 and the output shaft 16 via the torsion bar 17 so that the input shaft 13 and the output shaft 16 rotate relatively slightly, a magnetic flux acting on the stator 40 from the permanent magnet 32 changes as the relative positional relationship between the permanent magnet 32 and the stator 40 changes.

Further, the magnetism collecting yoke 50 included in the torque sensor 30 is disposed near the stator 40. The magnetism collecting yoke 50 is a member configured to detect the change in the magnetic flux acting on the stator 40 from the permanent magnet 32, and is disposed near the flange 41 included in the stator 40. Since a pair of the first stator 40a and the second stator 40b are provided as the stators 40, a pair of a first magnetism collecting yoke 50a and a second magnetism collecting yoke 50b are provided as the magnetism collecting yokes 50 correspondingly. That is, as the magnetism collecting yokes 50, the first magnetism collecting yoke 50a is disposed near the first flange 41a included in the first stator 40a, and the second magnetism collecting yoke 50b is disposed near the second flange 41b included in the second stator 40b.

The pair of magnetism collecting yokes 50 is located between the two flanges 41 included in the stators 40, and overlaps the flanges 41 of the stators 40 with a gap in the axial direction. That is, the first magnetism collecting yoke 50a is disposed near a surface of the first flange 41a included in the first stator 40a, the surface being on a side where the second flange 41b is located, and the second magnetism collecting yoke 50b is disposed near a surface of the second flange 41b included in the second stator 40b, the surface being on a side where the first flange 41a is located. In this manner, since the magnetism collecting yoke 50 is located near the flange 41, the magnetism collecting yoke 50 can detect the change in the magnetic flux acting on the stator 40 from the permanent magnet 32 when the input shaft 13 and the output shaft 16 rotate relatively slightly.

Furthermore, the Hall IC 55 is disposed between the two magnetism collecting yokes 50. The Hall IC 55 is disposed between the magnetism collecting yokes 50 at a position away from portions of the magnetism collecting yokes 50 located near the flanges 41 of the stators 40. The Hall IC 55 can detect a change in a magnetic flux density acting on the two magnetism collecting yokes 50, convert the detected change in the magnetic flux density into an electric signal, and output the electric signal. Note that, instead of the Hall IC, a magnetic sensor to which a magnetoresistance effect or a tunnel magnetoresistance effect is applied can be used. In short, it is sufficient if the change in the magnetic flux density generated between the magnetism collecting yokes 50 is output as the electric signal.

The magnetism collecting yoke 50 and the Hall IC 55 are attached to the housing 20. The magnetism collecting yoke 50 and the Hall IC 55 are fixed to, for example, a housing (not illustrated) holding the both, and the housing is attached to the first housing 21 in a state where the magnetism collecting yoke 50 and the Hall IC 55 are disposed inside the first housing 21. As a result, the magnetism collecting yoke 50 is disposed inside the first housing 21 in a state where the pair of magnetism collecting yokes 50 are located between the two flanges 41 included in the stators 40 and the Hall IC 55 is disposed between the two magnetism collecting yokes 50.

The permanent magnet 32 included in the torque sensor 30 is attached to the input shaft 13 by a magnet sleeve 33. The permanent magnet 32 and the magnet sleeve 33 constitute a magnet member 31 in the torque sensor 30, and the permanent magnet 32 is attached to the input shaft 13 by connecting the magnet member 31 to an outer peripheral surface 13b of the input shaft 13. Out of the permanent magnet 32 and the magnet sleeve 33 included in the magnet member 31, the magnet sleeve 33 is a tubular member, and the magnet sleeve 33 is attached to the input shaft 13 by press-fitting the input shaft 13 into the magnet sleeve 33. The permanent magnet 32 is disposed on an outer peripheral surface of the magnet sleeve 33, and the permanent magnet 32 is fixed to the magnet sleeve 33 by, for example, an adhesive.

The magnet member 31 including the permanent magnet 32 is attached to the input shaft 13 by press-fitting the input shaft 13 into the magnet sleeve 33 in this manner. Therefore, the magnet sleeve 33 included in the magnet member 31 is connected to the input shaft 13 in a connecting portion 15, which is a portion of the input shaft 13 to which the magnet member 31 is connected. The connecting portion 15 is a portion of the outer peripheral surface 13b of the input shaft 13 to which the magnet member 31 is connected and attached. The magnet member 31 is connected to and attached to the connecting portion 15 of the input shaft 13 by press-fitting, for example. The permanent magnet 32 is rotatable integrally with the input shaft 13 by attaching the magnet member 31 including the permanent magnet 32 to the input shaft 13.

Further, the magnet member 31 attached to the input shaft 13 has a separating portion 34 separated from the outer peripheral surface 13b of the input shaft 13. A position of the separating portion 34 in the axial direction is different from that of the connecting portion 15, and in the first embodiment, the separating portion 34 is located on a side where the output shaft 16 is located in the axial direction with respect to the connecting portion 15. Specifically, in the first embodiment, an outer diameter of the input shaft 13 at a position of the connecting portion 15 is larger than that of a portion of the magnet member 31 where the separating portion 34 is located. That is, in the input shaft 13, an outer diameter at the same position as the portion where the separating portion 34 is located in the axial direction is smaller than an outer diameter at the position of the connecting portion 15.

On the other hand, in the magnet member 31, an inner diameter at the position of the connecting portion 15 is the same as an inner diameter at the position of the separating portion 34. That is, in the magnet member 31, the inner diameter of the magnet sleeve 33 included in the magnet member 31 has the same size at the position of the connecting portion 15 and the position of the separating portion 34. Therefore, an inner peripheral surface of the magnet member 31 at the position of the separating portion 34 is separated radially outward from the outer peripheral surface 13b of the input shaft 13.

The connecting portion 15 of the input shaft 13 to which the magnet member 31 is connected is located at a position different from the press-fitting portion 14 in the axial direction of the input shaft 13. When the magnet member 31 is attached to the input shaft 13 at the time of manufacturing the electric power steering device 10, the position of the connecting portion 15, which is the portion of the input shaft 13 to which the magnet member 31 is connected, is set to be different from a position of the press-fitting portion 14 in the axial direction. As a result, the magnet member 31 including the permanent magnet 32 can be attached to the input shaft 13 without being affected by a slight expansion in the diameter of the input shaft 13 at the position of the press-fitting portion 14 due to press-fitting of the torsion bar 17 into the input-shaft-side hole 13a of the input shaft 13.

In the first embodiment, the connecting portion 15 of the input shaft 13 to which the magnet member 31 is connected is located on a side where the output shaft 16 is located with respect to the position where the press-fitting portion 14 is located in the axial direction. That is, the position of the press-fitting portion 14 of the torsion bar 17 in the input shaft 13 in the axial direction is located on a side opposite to the side on the output shaft 16 side with respect to the position of the connecting portion 15.

The stator 40 is attached to the output shaft 16 by a stator sleeve 43 and a carrier 44. The stator sleeve 43 is a tubular member, and the stator sleeve 43 is attached to the output shaft 16 by press-fitting the output shaft 16 into the stator sleeve 43. The carrier 44 is a tubular member, and is formed integrally with the stator sleeve 43 by injection molding. Therefore, in the carrier 44, when the stator sleeve 43 is attached to the output shaft 16, the carrier 44 is also attached to the output shaft 16 together with the stator sleeve 43.

The carrier 44 attached to the output shaft 16 by the stator sleeve 43 is supported by the stator sleeve 43 to be disposed at a position from the output shaft 16 toward the input shaft 13, and disposed at a position radially outward of the input shaft 13. Furthermore, the carrier 44 is disposed at the same position as the position where the permanent magnet 32 included in the magnet member 31 is located in the axial direction, and is disposed radially outward of the permanent magnet 32.

The stator 40 is attached to the carrier 44 disposed in this manner. Specifically, each of the stators 40, which are the first stator 40a and the second stator 40b, is attached to the carrier 44 in a form in which the teeth 42 are located radially inward of the carrier 44 and the flange 41 protrudes from the inner side to the outer side in the radial direction of the carrier 44. As a result, both the first stator 40a and the second stator 40b, which are the pair of stators 40, are disposed at the same position as the position where the permanent magnet 32 is located in the axial direction, and are disposed radially outward of the permanent magnet 32.

Further, the first stator 40a and the second stator 40b are attached to the carrier 44 formed integrally with the stator sleeve 43 attached to the output shaft 16, and thus are rotatable integrally with the output shaft 16. In other words, the stator 40 disposed so as to be rotatable integrally with the output shaft 16 includes the flange 41 protruding outward in the radial direction of the output shaft 16 and is fixed to the output shaft 16.

As described above, the permanent magnet 32 is fixed to the input shaft 13, and the stator 40 is fixed to the output shaft 16, whereby the permanent magnet 32 and the stator 40 are disposed inside the housing 20 together with the input shaft 13 and the output shaft 16. In the first embodiment, the permanent magnet 32 and the stator 40 are disposed inside the first housing 21.

Further, a key lock collar 75 included in a lock device (not illustrated) that restricts the rotation of the steering shaft 12 is attached to the steering shaft 12. The key lock collar 75 has a sleeve shape, and is disposed on the outer peripheral surface 13b of the input shaft 13 near a portion where the press-fitting portion 14 is located in the axial direction in the input shaft 13. Therefore, the lock device that restricts the rotation of the steering shaft 12 restricts the rotation of the input shaft 13 included in the steering shaft 12. The input shaft 13 is press-fitted into the key lock collar 75, whereby the key lock collar 75 is attached so as not to be relatively rotatable with respect to the input shaft 13. In the lock device, for example, when a driver of a vehicle removes a key, a pin protrudes from the housing 20 toward the key lock collar 75, and the pin is fitted to the key lock collar 75. As a result, the housing 20 and the input shaft 13 are fixed so as not to be relatively rotatable, and the steering wheel 11 cannot be rotated in a state where the key is removed.

The bearing 60 and the bearing 65 that rotatably support the output shaft 16 are so-called rolling bearings. Out of the bearing 60 and the bearing 65, the bearing 60 rotatably supports the output shaft 16 with respect to the first housing 21. That is, the bearing 60 is disposed between the output shaft 16 and the first housing 21 with an inner peripheral surface fitted to the output shaft 16 and an outer peripheral surface fitted to the first housing 21, and rotatably supports the output shaft 16 with respect to the first housing 21. On an inner peripheral surface 22 of the first housing 21 to which the bearing 60 is fitted, a stepped portion 23 is formed to connect portions having different sizes in the radial direction on the inner peripheral surface 22. The stepped portion 23 faces the axial direction, and the bearing 60 abuts on the stepped portion 23 in the axial direction. As a result, the bearing 60 is fitted to the first housing 21 in a state where relative movement in the axial direction with respect to the first housing 21 is restricted by the stepped portion 23.

Further, at least a part of the bearing 60 is disposed at the same position as the position of the torsion bar sleeve 71 in the axial direction. That is, at least a part of the bearing 60 in the axial direction is disposed at the same position as the position of the torsion bar sleeve 71 on the outer side in the radial direction of the torsion bar sleeve 71, and rotatably supports the output shaft 16 with respect to the first housing 21.

On the other hand, the bearing 65 rotatably supports the output shaft 16 with respect to the second housing 25. That is, the bearing 65 is disposed between the output shaft 16 and the second housing 25 with an inner peripheral surface fitted to the output shaft 16 and an outer peripheral surface fitted to the second housing 25, and rotatably supports the output shaft 16 with respect to the second housing 25. A protruding portion 27 protruding inward in the radial direction is formed on an inner peripheral surface 26 of the second housing 25 to which the bearing 65 is fitted, and the bearing 65 abuts on the protruding portion 27 in the axial direction. As a result, the bearing 65 is fitted to the second housing 25 in a state where relative movement in the axial direction with respect to the second housing 25 is restricted by the protruding portion 27.

Next, the operational effect of the electric power steering device 10 will be described. In a case where the steering wheel 11 is operated during driving of the vehicle on which the electric power steering device 10 is mounted, the steering force applied to the steering wheel 11 is transmitted from the steering wheel 11 to the steering shaft 12. The steering force transmitted to the steering shaft 12 is transmitted as the steering torque from the steering shaft 12 to the intermediate shaft 82, and is transmitted from the intermediate shaft 82 to the pinion gear 85a via the stub shaft 84. As a result, the steering gear 85 having the pinion gear 85a converts the rotational motion transmitted from the pinion gear 85a into the linear motion of the rack bar 85b to operate the tie rod 86.

Further, the electric power steering device 10 according to the first embodiment includes the electric motor 91 that generates the auxiliary steering torque that assists the steering of the driver. The electric motor 91 generates the auxiliary steering torque based on the steering torque detected by the torque sensor 30 disposed between the input shaft 13 and the output shaft 16 of the steering shaft 12.

The torque sensor 30 detects the steering torque applied from the steering wheel 11 to the steering shaft 12 based on an angle of relative rotation when the input shaft 13 and the output shaft 16 rotate relative to each other. That is, since the input shaft 13 and the output shaft 16 are coupled via the torsion bar 17, when the steering torque is applied to the input shaft 13 of the steering shaft 12, the steering torque is transmitted between the input shaft 13 and the output shaft 16 via the torsion bar 17.

That is, the torsion bar 17 is press-fitted into the input-shaft-side hole 13a of the input shaft 13 by the press-fitting portion 14, and the torsion bar 17 rotates integrally with the input shaft 13 at the position of the press-fitting portion 14. Therefore, when the input shaft 13 rotates, from the input shaft 13 to the torsion bar 17, the steering torque is transmitted from the input shaft 13 to the torsion bar 17 at the position of the press-fitting portion 14. Further, the torsion bar 17 is coupled to the output shaft 16 by the coupling pin 70 inside the output-shaft-side hole 16a, and the torsion bar 17 and the output shaft 16 rotate integrally with each other at the position coupled by the coupling pin 70. Therefore, when the torsion bar 17 rotates, from the torsion bar 17 to the output shaft 16, the steering torque is transmitted from the torsion bar 17 to the output shaft 16 at the position coupled by the coupling pin 70.

As a result, when the steering torque is applied to the input shaft 13 of the steering shaft 12, the steering torque is transmitted from the input shaft 13 to the output shaft 16 via the torsion bar 17. At this time, the torsion bar 17 is slightly twisted, so that the input shaft 13 and the output shaft 16 rotate relative to each other.

Since the magnet member 31 including the permanent magnet 32 is attached to the input shaft 13 and the stator 40 is attached to the output shaft 16 in the torque sensor 30, when the input shaft 13 and the output shaft 16 rotate relative to each other, the permanent magnet 32 and the stator 40 included in the torque sensor 30 also rotate relative to each other. An angle of relative rotation between the permanent magnet 32 and the stator 40 increases as the steering torque acting between the input shaft 13 and the output shaft 16 increases.

When the permanent magnet 32 and the stator 40 rotate relative to each other, the magnetic flux acting on the stator 40 from the permanent magnet 32 changes. The magnetism collecting yoke 50 disposed near the stator 40 can detect the change in the magnetic flux acting on the stator 40 from the permanent magnet 32. Therefore, when the permanent magnet 32 and the stator 40 rotate relative to each other due to the relative rotation between the input shaft 13 and the output shaft 16, the magnetism collecting yoke 50 disposed near the stator 40 can detect the change in the magnetic flux acting on the stator 40 from the permanent magnet 32.

In this manner, the magnetic flux, which acts on the stator 40 from the permanent magnet 32 and is detected by the magnetism collecting yoke 50, changes depending on the angle of relative rotation between the permanent magnet 32 and the stator 40. The Hall IC 55 detects the magnetic flux that changes depending on the angle of relative rotation between the permanent magnet 32 and the stator 40 detected by the magnetism collecting yoke 50 using a Hall element, converts the magnetic flux into the electric signal using an output circuit, and transmits the electric signal to the ECU 90 as an output signal from the torque sensor 30. That is, the torque sensor 30 detects the change in the magnetic flux acting on the stator 40 from the permanent magnet 32 by the magnetism collecting yoke 50 and the Hall IC 55 to detect the steering torque applied to the input shaft 13, and transmits the detected steering torque to the ECU 90 as an electric signal.

The ECU 90 operates the electric motor 91 based on the electric signal transmitted from the torque sensor 30, and causes the electric motor 91 to generate the auxiliary steering torque. That is, the electric signal transmitted from the Hall IC 55 of the torque sensor 30 to the ECU 90 changes depending on the angle of relative rotation between the permanent magnet 32 and the stator 40, and changes based on the steering torque acting between the input shaft 13 and the output shaft 16. Therefore, the ECU 90 uses the electric signal transmitted from the Hall IC 55 of the torque sensor 30 as information that changes according to the steering torque acting on the input shaft 13 and the output shaft 16, adjusts the power value supplied to the electric motor 91 based on the electric signal transmitted from the Hall IC 55, and causes the electric motor 91 to generate the auxiliary steering torque.

That is, the ECU 90 acquires a signal of the steering torque from the torque sensor 30, acquires a vehicle speed signal of the vehicle from the vehicle speed sensor 95, further acquires operation information of the electric motor 91 from a rotation detection device provided in the electric motor 91, and causes the electric motor 91 to generate the auxiliary steering torque based on the operation information, the steering torque, and the vehicle speed signal. The auxiliary steering torque generated by the electric motor 91 is transmitted to the output shaft 16 of the steering shaft 12 via the worm (not illustrated) and the worm wheel 94 which are coupled to the output shaft of the electric motor 91. As a result, the steering force applied to the steering wheel 11 from the driver is assisted by the auxiliary steering torque generated by the electric motor 91.

As described above, in the electric power steering device 10 according to the first embodiment, the torsion bar 17 is press-fitted into the input-shaft-side hole 13a of the input shaft 13 by the press-fitting portion 14, and the magnet member 31 included in the torque sensor 30, the position in the axial direction of the connecting portion 15, which is the portion of the input shaft 13 to which the magnet member 31 is connected, is different from the position of the press-fitting portion 14. As a result, even when the diameter of the input shaft 13 slightly increases at the position of the press-fitting portion 14 when the torsion bar 17 is press-fitted into the input-shaft-side hole 13a of the input shaft 13, the magnet member 31 including the permanent magnet 32 can be attached to the input shaft 13 without being affected by the expansion in the diameter of the input shaft 13. Therefore, the permanent magnet 32 having low ductility can be attached to the input shaft 13 while avoiding the expansion in the diameter of the input shaft 13 due to the press-fitting of the torsion bar 17. As a result, breakage of the permanent magnet 32 used in the torque sensor 30 can be suppressed.

Further, the magnet member 31 has the magnet sleeve 33 where the permanent magnet 32 is disposed, and the magnet sleeve 33 is connected to the connecting portion 15 of the input shaft 13, so that a force acting on the permanent magnet 32 when the magnet member 31 is disposed on the input shaft 13 can be reduced as much as possible. That is, stress generated in the permanent magnet 32 when the magnet member 31 is disposed on the input shaft 13 can be reduced as much as possible. As a result, breakage of the permanent magnet 32 used in the torque sensor 30 can be suppressed.

Since the torsion bar sleeve 71 is disposed between the output-shaft-side hole 16a and the torsion bar 17 in the output-shaft-side hole 16a of the output shaft 16, the torsion bar 17 can be supported by the torsion bar sleeve 71 in the output-shaft-side hole 16a. As a result, it is possible to suppress the torsion bar 17 from falling down in the output-shaft-side hole 16a. For example, when the torsion bar 17 is press-fitted into the input-shaft-side hole 13a of the input shaft 13 in a state where the torsion bar 17 is disposed in the output-shaft-side hole 16a, the torsion bar 17 is supported by the torsion bar sleeve 71, so that the torsion bar 17 can be press-fitted into the input-shaft-side hole 13a while preventing the torsion bar 17 from falling down in the output-shaft-side hole 16a. As a result, assemblability of the electric power steering device 10 can be improved.

Further, since at least a part of the bearing 60, which rotatably supports the output shaft 16 with respect to the housing 20, is disposed at the same position as the position of the torsion bar sleeve 71 in the axial direction, a load acting on the torsion bar sleeve 71 from the torsion bar 17 can be efficiently received by the bearing 60. That is, the load acting on the torsion bar sleeve 71 from the torsion bar 17 can be received by the bearing 60 disposed at a short distance from the torsion bar sleeve 71. As a result, the load acting on the bearing 60 can be reduced, and it is possible to suppress a state where relative rotation between an inner ring and an outer ring of the bearing 60 becomes difficult due to a large load acting on the bearing 60 in the radial direction. Therefore, it is possible to suppress an increase in rotational resistance when the output shaft 16 supported by the bearing 60 is rotated, and it is possible to reduce rotational resistance when the steering shaft 12 having the output shaft 16 is rotated. As a result, the steering torque at the time of rotating the steering wheel 11 to perform steering can be reduced, and the operability of the electric power steering device 10 can be improved.

Further, since the coupling pin 70 that couples the torsion bar 17 disposed inside the output-shaft-side hole 16a and the output shaft 16 is disposed on the output shaft 16, it is possible to suppress occurrence of buckling in the torsion bar 17. That is, when the torsion bar 17 press-fitted to the input shaft 13 is also press-fitted to the output shaft 16, as a position where a force in the axial direction is applied to the torsion bar 17, it is likely to apply the force from a position away from a portion of the torsion bar 17 press-fitted to the output shaft 16. In this case, it is conceivable that the buckling occurs in the torsion bar 17 due to an increase in a distance between the portion to which the force is applied in the axial direction and the press-fitted portion.

On the other hand, in the first embodiment, since the torsion bar 17 and the output shaft 16 are coupled by the coupling pin 70, it is possible to reduce the force in the axial direction applied to the torsion bar 17 when the torsion bar 17 is inserted into the output-shaft-side hole 16a and coupled to the output shaft 16. As a result, it is possible to suppress the occurrence of the buckling in the torsion bar 17 due to the application of the large force in the axial direction to the torsion bar 17 from the position away from the portion of the torsion bar 17 press-fitted to the output shaft 16. Therefore, assemblability at the time of assembling the torsion bar 17 to the output shaft 16 can be improved, and the workability in the assembly process can be improved. As a result, manufacturing cost can be reduced.

### [Second Embodiment]

Next, the electric power steering device 10 according to a second embodiment will be described. The same components as those of the first embodiment are denoted by the same reference signs, and the description thereof will be omitted. Hereinafter, differences from the first embodiment will be mainly described.

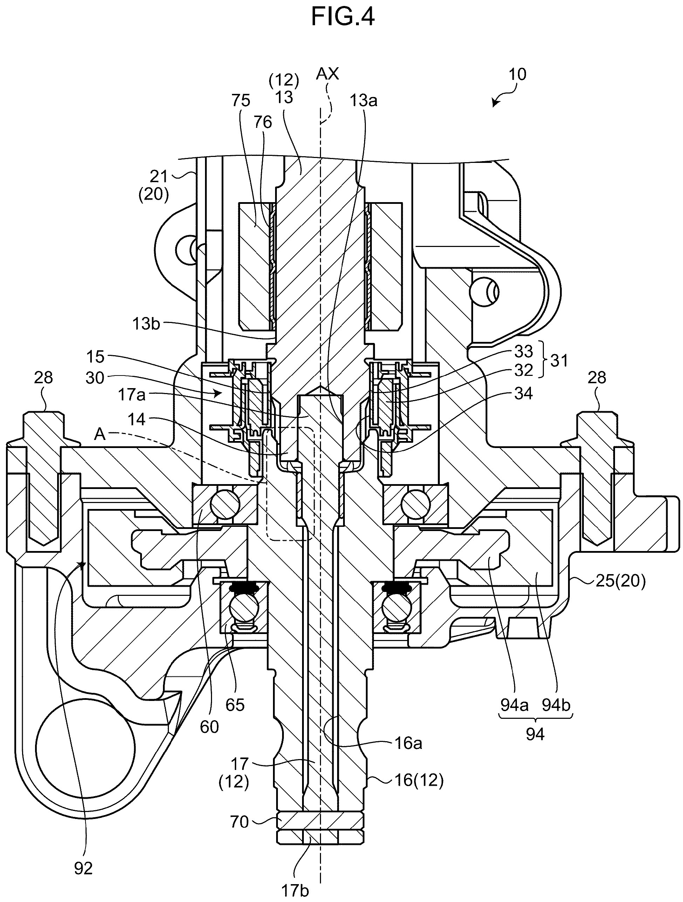

FIG. 4 is a cross-sectional view of a main part of the electric power steering device 10 according to the second embodiment. In the electric power steering device 10 according to the second embodiment, the torsion bar 17 is press-fitted into the input-shaft-side hole 13a of the input shaft 13, and the connecting portion 15, which is a portion of the input shaft 13 to which the magnet member 31 is connected, is located at a position different from a position of the press-fitting portion 14 in the axial direction of the input shaft 13, which is similar to the first embodiment.

In the second embodiment, the connecting portion 15 of the input shaft 13 to which the magnet member 31 is connected is located on a side opposite to a side where the output shaft 16 is located with respect to the position where the press-fitting portion 14 is located in the axial direction, which is different from the first embodiment. That is, the press-fitting portion 14 of the torsion bar 17 in the input shaft 13 is located on a side of the output shaft 16 with respect to the position of the connecting portion 15 in the axial direction. Specifically, the press-fitting portion 14 does not have portions in which the position in the axial direction is near the position of the connecting portion 15 and the position in the axial direction is the same as the position of the connecting portion 15, but is located slightly closer to the output shaft 16 than the position of the connecting portion 15.

Further, in the second embodiment, in the magnet member 31, the separating portion 34 separated from the outer peripheral surface 13b of the input shaft 13 extends from the position of the connecting portion 15 to a side where the press-fitting portion 14 is located in the axial direction of the input shaft 13. Therefore, at least a part of the press-fitting portion 14 whose position in the axial direction is located near the position of the connecting portion 15 is located inside the separating portion 34 included in the magnet member 31 in the radial direction of the input shaft 13. That is, at least a part of the press-fitting portion 14 in the axial direction is located at the same position as the position of the separating portion 34 included in the magnet member 31 in the axial direction.

Specifically, the permanent magnet 32 attached to the magnet sleeve 33 is disposed in the separating portion 34 of the magnet member 31. Therefore, at least a part of the press-fitting portion 14 is located inside the permanent magnet 32 in the radial direction with respect to the permanent magnet 32 disposed in the separating portion 34 of the magnet member 31.

Further, in the second embodiment, the input-shaft-side hole 13a formed in the input shaft 13 is substantially formed only in the press-fitting portion 14, and the input-shaft-side hole 13a formed in the press-fitting portion 14 is open at an end of the input shaft 13 on the output shaft 16 side. In other words, the press-fitting portion 14 is formed from the end of the input shaft 13 on the output shaft 16 side toward the side opposite to the side where the output shaft 16 is located in the axial direction.

In this manner, the press-fitting portion 14 of the input shaft 13 located closer to the end of the input shaft 13 on the output shaft 16 side is formed by forging. That is, in a method for manufacturing the electric power steering device 10 according to the second embodiment, forging is performed from the outer peripheral surface 13b side with respect to a range in which the press-fitting portion 14 is formed in the axial direction of the input shaft 13. The input shaft 13 has the forged press-fitting portion 14. Further, in the input-shaft-side hole 13a, the press-fitting portion 14 of the input shaft 13 subjected to forging from the outer peripheral surface 13b side is cut from the end side of the input shaft 13 on the side where the output shaft 16 is located. As a result, the rigidity of the press-fitting portion 14 of the input shaft 13 on the outer peripheral surface 13b side is improved, and the input-shaft-side hole 13a into which the torsion bar 17 is press-fitted is formed with high accuracy.

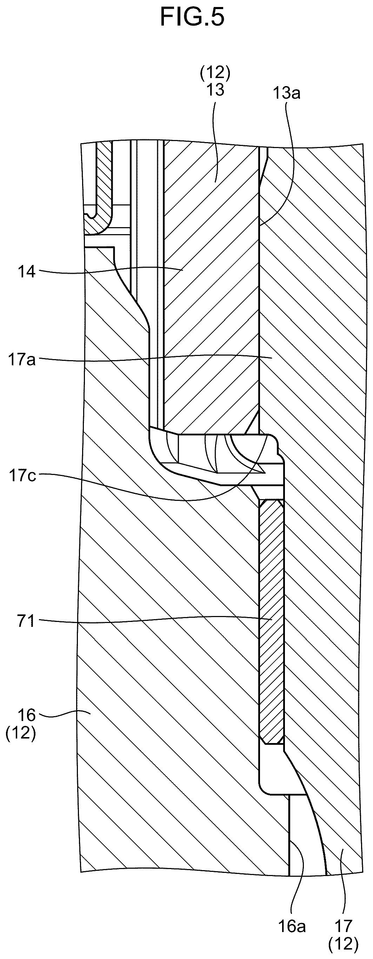

FIG. 5 is a detailed view of a portion A in FIG. 4. In the torsion bar 17 press-fitted into the input-shaft-side hole 13a formed in the press-fitting portion 14 of the input shaft 13, a pushing portion 17c is formed in a portion of the enlarged diameter portion 17a press-fitted into the input-shaft-side hole 13a of the torsion bar 17 on the side where the output shaft 16 is located. The pushing portion 17c is formed such that an end of the enlarged diameter portion 17a on the side where the output shaft 16 is located is a flat surface orthogonal to the axial direction of the input shaft 13, that is, the axial direction of the torsion bar 17. That is, the pushing portion 17c of the torsion bar 17 is a stepped portion with a portion, which has a smaller diameter than the enlarged diameter portion 17a and is coupled to the enlarged diameter portion 17a, and the stepped portion is formed as the flat surface orthogonal to the axial direction of the torsion bar 17.

The pushing portion 17c of the torsion bar 17 formed in this manner is formed such that a position in the axial direction of the pushing portion 17c in a state where the enlarged diameter portion 17a is press-fitted into the input-shaft-side hole 13a of the input shaft 13 is substantially the same as a position of the end of the input shaft 13 on the output shaft 16 side.

Also in the second embodiment, the key lock collar 75 is disposed on the outer peripheral surface 13b of the input shaft 13. The key lock collar 75 is disposed at a position different from the press-fitting portion 14 in the axial direction, and the key lock collar 75 is disposed at a position opposite to the side where the output shaft 16 is located with respect to the press-fitting portion 14 in the axial direction. That is, the key lock collar 75 is disposed at a position opposite to the side where the output shaft 16 is located in the axial direction with respect to the magnet member 31 disposed on the input shaft 13.

In the second embodiment, the key lock collar 75 is disposed on the outer peripheral surface 13b of the input shaft 13 via a slip ring 76, which is different from the first embodiment. The slip ring 76 has a leaf spring shape formed in a substantially annular shape, and is disposed between an inner peripheral surface of the key lock collar 75 and the outer peripheral surface 13b of the input shaft 13. The slip ring 76 holds the key lock collar 75 on the outer peripheral surface 13b of the input shaft 13 while generating a frictional force between the inner peripheral surface of the key lock collar 75 and an outer peripheral surface of the slip ring 76 and between the outer peripheral surface 13b of the input shaft 13 and an inner peripheral surface of the slip ring 76 by an elastic force of the leaf spring.

The slip ring 76 disposed in this manner can slip and rotate the key lock collar 75 and the input shaft 13 relative to each other when a large force in a direction to rotate the key lock collar 75 and the input shaft 13 relative to each other is input. Therefore, the key lock collar 75 is disposed to be rotatable relative to the input shaft 13 by the slip of the slip ring 76 when a large force in the direction to rotate the key lock collar 75 and the input shaft 13 relative to each other is input with a magnitude of a predetermined value or more.

As described above, in the electric power steering device 10 according to the second embodiment, the position in the axial direction of the connecting portion 15, which is the portion of the input shaft 13 to which the magnet member 31 of the torque sensor 30 is connected, is different from the position of the press-fitting portion 14 of the input shaft 13 to which the torsion bar 17 is press-fitted, which is similar to the first embodiment. Therefore, the permanent magnet 32, which has low ductility and is included in the magnet member 31, can be attached to the input shaft 13 while avoiding an expansion in a diameter of the input shaft 13 due to press-fitting of the torsion bar 17. As a result, breakage of the permanent magnet 32 used in the torque sensor 30 can be suppressed.

Further, in the axial direction of the input shaft 13, the position of the press-fitting portion 14 of the input shaft 13 into which the torsion bar 17 is press-fitted, is located closer to the output shaft 16 than the position of the connecting portion 15 of the input shaft 13 to which the magnet member 31 is connected. Therefore, it is possible to reduce a depth of the input-shaft-side hole 13a from the end of the input shaft 13 can be reduced, and to reduce a cutting range at the time of forming the input-shaft-side hole 13a by cutting with respect to the input shaft 13. Therefore, the cutting process in forming the input-shaft-side hole 13a can be easily performed.

Further, since the depth of the input-shaft-side hole 13a from the end of the input shaft 13 is reduced, it is possible to shorten a distance by which the torsion bar 17 is pushed into the input-shaft-side hole 13a at the time of press-fitting the torsion bar 17 into the input-shaft-side hole 13a. As a result, it is possible to improve assemblability at the time of assembling the torsion bar 17 to the input shaft 13, and it is possible to improve workability in the assembly process. As a result, the manufacturing cost can be reduced.

Further, since the pushing portion 17c is formed in the enlarged diameter portion 17a of the torsion bar 17, the torsion bar 17 can be easily press-fitted into the input-shaft-side hole 13a by performing press-fitting while applying a load to the pushing portion 17c when the torsion bar 17 is press-fitted into the input-shaft-side hole 13a of the input shaft 13. As a result, when the torsion bar 17 is press-fitted into the input-shaft-side hole 13a of the input shaft 13, it is possible to suppress occurrence of buckling in the torsion bar 17 due to application of a load to a position away from the enlarged diameter portion 17a in the torsion bar 17. Therefore, it is possible to improve the assemblability at the time of assembling the torsion bar 17 to the input shaft 13, and it is possible to improve the workability in the assembly process. As a result, manufacturing cost can be reduced.

Further, since at least a part of the press-fitting portion 14 of the input shaft 13 is located radially inward of the separating portion 34 included in the magnet member 31, it is possible to reduce the depth of the input-shaft-side hole 13a into which the torsion bar 17 is press-fitted while making the positions of the connecting portion 15 to which the magnet member 31 is connected and the press-fitting portion 14 in the input shaft 13 different in the axial direction. As a result, it is possible to simplify the cutting process at the time of forming the input-shaft-side hole 13a in the input shaft 13, and to attach the permanent magnet 32 included in the magnet member 31 to the input shaft 13 while avoiding the expansion in the diameter of the input shaft 13 due to press-fitting of the torsion bar 17. As a result, it is possible to suppress the breakage of the permanent magnet 32 used in the torque sensor 30 while reducing the manufacturing cost.

Further, since the press-fitting portion 14 of the input shaft 13 is formed by forging, the rigidity of the press-fitting portion 14 can be enhanced. Therefore, the input shaft 13 and the torsion bar 17, coupled to each other by press-fitting the torsion bar 17 into the input-shaft-side hole 13a of the input shaft 13, can be firmly coupled to each other, and the relative rotation between the input shaft 13 and the torsion bar 17 can be suppressed when steering torque is applied to the input shaft 13. As a result, the steering torque applied to the input shaft 13 can be appropriately transmitted to the output shaft 16 via the torsion bar 17, and the input shaft 13 and the output shaft 16 can be rotated relative to each other by slight twisting of the torsion bar 17 according to a magnitude of the steering torque. Therefore, the magnitude of the steering torque can be detected by detecting the relative rotation between the input shaft 13 and the output shaft 16 by the torque sensor 30. As a result, the magnitude of the steering torque input to the steering shaft 12 can be appropriately detected.

Further, since the key lock collar 75 disposed on the outer peripheral surface 13b of the input shaft 13 is disposed at the position different from the press-fitting portion 14 in the axial direction of the input shaft 13, it is possible to suppress a portion where the key lock collar 75 is disposed on the input shaft 13 via the slip ring 76 from being located at the same position in the axial direction with the press-fitting portion 14 of the torsion bar 17 in the input shaft 13. Therefore, when the torsion bar 17 is press-fitted into the input-shaft-side hole 13a of the input shaft 13, the diameter of the input shaft 13 slightly increases at the position of the press-fitting portion 14, and thus, it is possible to suppress a change in a fitting force of the key lock collar 75 with respect to the input shaft 13 via the slip ring 76 from a fitting force set at the time of design. As a result, when a force in the direction to rotate the input shaft 13 and the key lock collar 75 relative to each other is applied to the key lock collar 75 by a lock device (not illustrated), it is possible to suppress slip torque, which is torque with a magnitude that causes the key lock collar 75 to rotate relative to the input shaft 13, from being changed from set slip torque. Therefore, the key lock collar 75 can be prevented from rotating relative to the input shaft 13 with unexpected small torque, and the key lock collar 75 can be appropriately fitted to the input shaft 13. As a result, the lock device including the key lock collar 75 can be operated appropriately.

### [Modification]

Note that the magnet member 31 connected to the input shaft 13 includes the magnet sleeve 33, and the permanent magnet 32 is disposed on the magnet sleeve 33 in the first embodiment and the second embodiment described above, but the magnet member 31 does not necessarily include the magnet sleeve 33.

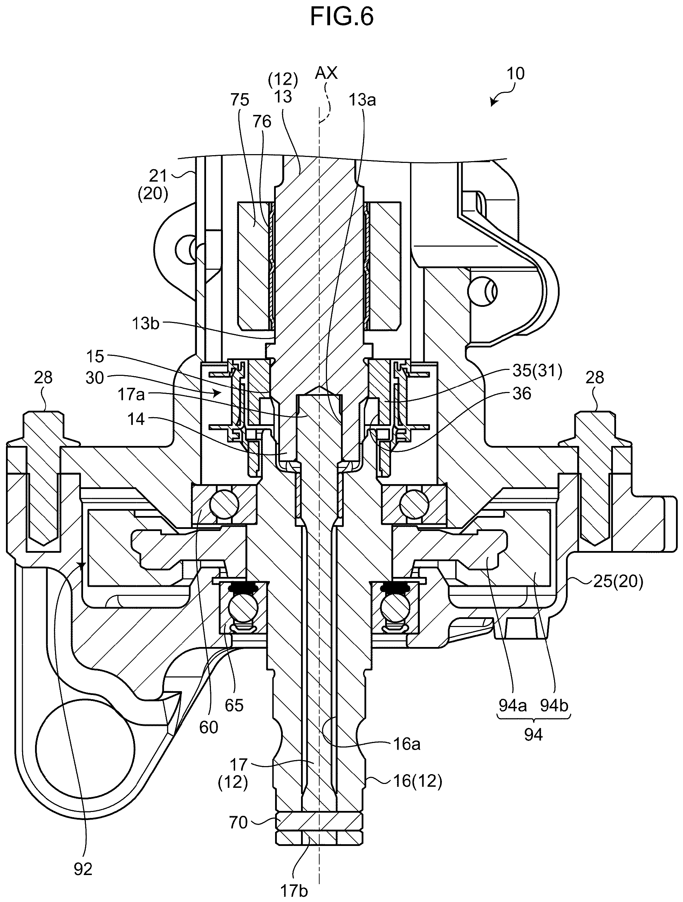

FIG. 6 is a modification of the electric power steering device 10 according to the second embodiment, and is a cross-sectional view of a main part of the electric power steering device 10 illustrating a case where the magnet member 31 does not include the magnet sleeve 33. The magnet member 31 does not necessarily include the magnet sleeve 33 and may be configured using a permanent magnet 35 alone. That is, the permanent magnet 35 included in the magnet member 31 may be directly connected to the connecting portion 15 of the input shaft 13 without passing through the magnet sleeve 33. As the permanent magnet 35 directly connected to the connecting portion 15 of the input shaft 13, a multipolar magnet, which is formed in a substantially cylindrical shape and has a plurality of N poles and S poles alternately disposed in the circumferential direction similarly to the permanent magnet 32 illustrated in FIG. 3, is used.

Further, similarly to the magnet member 31 in the first embodiment and the second embodiment, the permanent magnet 35 may be provided with a separating portion 36 separated from the outer peripheral surface 13b of the input shaft 13. In this case, as illustrated in FIG. 6, the separating portion 36 provided in the permanent magnet 35 is formed to extend from the position of the connecting portion 15 to a side where the press-fitting portion 14 is located in the axial direction of the input shaft 13, and at least a part of the press-fitting portion 14 is preferably located inside the separating portion 36 in the radial direction.

The magnet member 31 can suppress the number of components by directly connecting the permanent magnet 35 included in the magnet member 31 to the connecting portion 15 of the input shaft 13 as described above. As a result, the manufacturing cost can be reduced.

Further, even when the permanent magnet 35 is directly connected to the connecting portion 15 of the input shaft 13, the separating portion 36 is formed in the permanent magnet 35, and at least a part of the press-fitting portion 14 of the input shaft 13 is located radially inward of the separating portion 36 provided in the permanent magnet 35, so that a depth of the input-shaft-side hole 13a can be reduced while making the positions of the connecting portion 15 and the press-fitting portion 14 different in the axial direction. Further, as a result, the cutting process at the time of forming the input-shaft-side hole 13a in the input shaft 13 can be simplified, and the permanent magnet 35 can be attached to the input shaft 13 while avoiding the expansion in the diameter of the input shaft 13 due to press-fitting of the torsion bar 17. As a result, it is possible to suppress breakage of the permanent magnet 35 used in the torque sensor 30 while reducing the manufacturing cost.

Further, the torsion bar 17 is coupled to the output shaft 16 by the coupling pin 70 in the first embodiment and the second embodiment described above, but the torsion bar 17 may be coupled to the output shaft 16 without using the coupling pin 70. The torsion bar 17 may be coupled to the output shaft 16, for example, by being press-fitted into the output-shaft-side hole 16a.

Further, the electric power steering device 10 is of the column assist type in which auxiliary steering torque is applied to the steering shaft 12 in the first embodiment and the second embodiment described above, but the electric power steering device 10 may be of a type other than the column assist type. The electric power steering device 10 may be a single pinion type in which the pinion gear 85a is rotated by a driving force generated by the electric motor 91, or may be a dual pinion type including a second pinion gear that applies the driving force generated by the electric motor 91 to the rack bar 85b from a position different from the pinion gear 85a.

Although the preferred embodiments of the present disclosure have been described above, the present disclosure is not limited to those described in the above embodiments. The configurations described as the embodiments and the modification may be appropriately combined.

### Reference Signs List

- 10: ELECTRIC POWER STEERING DEVICE

- 11: STEERING WHEEL
- 12: STEERING SHAFT
- 13: INPUT SHAFT
- 13a: INPUT-SHAFT-SIDE HOLE
- 13b: OUTER PERIPHERAL SURFACE
- 14: PRESS-FITTING PORTION
- 15: CONNECTING PORTION
- 16: OUTPUT SHAFT
- 16a: OUTPUT-SHAFT-SIDE HOLE
- 17: TORSION BAR
- 17a, 17b: ENLARGED DIAMETER PORTION
- 20: HOUSING
- 21: FIRST HOUSING
- 25: SECOND HOUSING
- 30: TORQUE SENSOR
- 31: MAGNET MEMBER
- 32, 35: PERMANENT MAGNET
- 33: MAGNET SLEEVE
- 34, 36: SEPARATING PORTION
- 40: STATOR
- 43: STATOR SLEEVE
- 50: MAGNETISM COLLECTING YOKE
- 55: HALL IC
- 60, 65: BEARING
- 70: COUPLING PIN
- 71: TORSION BAR SLEEVE
- 75: KEY LOCK COLLAR
- 81, 83: UNIVERSAL JOINT
- 82: INTERMEDIATE SHAFT
- 84: STUB SHAFT
- 85: STEERING GEAR
- 85a: PINION GEAR
- 85b: RACK BAR
- 86: TIE ROD
- 90: ECU
- 91: ELECTRIC MOTOR
- 92: SPEED REDUCTION DEVICE
- 94: WORM WHEEL
- 95: VEHICLE SPEED SENSOR
- 99: POWER SUPPLY DEVICE

## Claims

1. An electric power steering device comprising:
an input shaft having an input-shaft-side hole inside;
an output shaft having an output-shaft-side hole inside;
a torsion bar with one end side disposed inside the input-shaft-side hole and another end side disposed inside the output-shaft-side hole, the torsion bar coupling the input shaft and the output shaft; and
a torque sensor including a magnet member that includes a permanent magnet and is connected to an outer peripheral surface of the input shaft,
wherein the input shaft has a press-fitting portion where the torsion bar is press-fitted into the input-shaft-side hole, and
a connecting portion, which is a portion of the input shaft to which the magnet member is connected, is located at a position different from a position of the press-fitting portion in an axial direction of the input shaft.

2. The electric power steering device according to claim 1, wherein
the magnet member includes a magnet sleeve on which the permanent magnet is disposed, and
the magnet sleeve is connected to the connecting portion of the input shaft.

3. The electric power steering device according to claim 1, wherein the permanent magnet included in the magnet member is connected to the connecting portion of the input shaft.

4. The electric power steering device according to claim 2 or 3, wherein
the magnet member has a separating portion that extends from the position of the connecting portion to a side where the press-fitting portion is located in the axial direction and is separated from the outer peripheral surface of the input shaft, and
at least a part of the press-fitting portion is located inside the separating portion in a radial direction of the input shaft.

5. The electric power steering device according to any one of claims 1 to 4, wherein the position of the press-fitting portion in the axial direction is located closer to the output shaft than the position of the connecting portion.

6. The electric power steering device according to any one of claims 1 to 5, wherein a torsion bar sleeve is disposed between the output-shaft-side hole and the torsion bar disposed inside the output-shaft-side hole.

7. The electric power steering device according to claim 6, further comprising:
a housing in which the input shaft and the output shaft are disposed; and
a bearing that rotatably supports the output shaft with respect to the housing, at least a part of the bearing being disposed at a same position as a position of the torsion bar sleeve in the axial direction.

8. The electric power steering device according to any one of claims 1 to 7, wherein
a key lock collar included in a lock device, which restricts rotation of the input shaft, is disposed on the outer peripheral surface of the input shaft, and
the key lock collar is disposed at a position different from the position of the press-fitting portion in the axial direction.

9. The electric power steering device according to any one of claims 1 to 8, wherein a coupling pin, which couples the output shaft and the torsion bar disposed inside the output-shaft-side hole, is disposed on the output shaft.

10. A method for manufacturing an electric power steering device,
the electric power steering device including:
an input shaft having an input-shaft-side hole inside;
an output shaft having an output-shaft-side hole inside;
a torsion bar with one end side disposed inside the input-shaft-side hole and another end side disposed inside the output-shaft-side hole, the torsion bar coupling the input shaft and the output shaft; and
a torque sensor including a magnet member connected to an outer peripheral surface of the input shaft,
the input shaft having a press-fitting portion where the torsion bar is press-fitted into the input-shaft-side hole,
the method comprising:
performing forging to form the press-fitting portion of the input shaft; and
forming a connecting portion, which is a portion of the input shaft to which the magnet member is connected, to be located at a position different from a position of the press-fitting portion in an axial direction of the input shaft.
